## Europäisches Patentamt

## European Patent Office

## Office européen des brevets

(19)

(11) Veröffentlichungsnummer: **0 131 196**
**B1**

(12) ## EUROPÄISCHE PATENTSCHRIFT

(45) Veröffentlichungstag der Patentschrift:
**25.02.87**

(21) Anmeldenummer: **84107304.2**

(22) Anmeldetag: **26.06.84**

(51) Int. Cl.⁴: **C 08 L 69/00,** C 08 L 67/02 //
(C08L69/00, 67:02, 51:04,
33:18),(C08L67/02, 69:00,
51:04, 33:18)

(54) **Thermoplastische Formmassen.**

(30) Priorität: **09.07.83 DE 3324906**

(43) Veröffentlichungstag der Anmeldung:
**16.01.85 Patentblatt 85/3**

(45) Bekanntmachung des Hinweises auf die Patenterteilung:
**25.02.87 Patentblatt 87/9**

(84) Benannte Vertragsstaaten:
**DE FR GB IT NL**

(56) Entgegenhaltungen:
**DE-A-1 810 993**
**DE-A-3 238 228**
**FR-A-2 187 841**
**GB-A-2 004 284**

**Die Akte enthält technische Angaben, die nach
dem Eingang der Anmeldung eingereicht wurden
und die nicht in dieser Patentschrift enthalten sind.**

(73) Patentinhaber: **BAYER AG, Konzernverwaltung RP
Patentabteilung, D-5090 Leverkusen 1 Bayerwerk
(DE)**

(72) Erfinder: **Stix, Wolfgang, Dr., Freudenbergstrasse
56b, D-6901 Neckarsteinach (DE)**
Erfinder: **Nouvertné, Werner, Dr., Scheiblerstrasse
95, D-4150 Krefeld 1 (DE)**
Erfinder: **Buding, Hartmuth, Dr.,
Liebermannstrasse 1, D-4047 Dormagen (DE)**

0 131 196

**Beschreibung**

Gegenstand der Erfindung sind thermoplastische Formmassen aus

(A) thermoplastischen, aromatischen Polycarbonaten mit Molekulargewichten $M_w$ zwischen 10.000 und 200.000 ($M_w$ = Gewichtsmittel, ermittelt mittels Lichtstreuung) und gegebenenfalls

(B) thermoplastischen Polyestern, bevorzugt im Mengenverhältnis Polycarbonat zu Polyester von 98: 2 bis 30: 70 und gegebenenfalls

(C) kautschukelastischen Pfropfpolymerisaten in Mengen von 1 bis 30 Gew.-%, vorzugsweise von 5 bis 25 Gew.-%, bezogen auf die Gewichtssumme aus (A) und (B), gekennzeichnet durch einen Gehalt an

(D) hydrierten Copolymerisaten aus ungesättigten Nitrilmonomeren und konjugierten Dienmonomeren, worin der Gehalt an ungesättigten Nitrileinheiten 10 - 55 Gew.%, bevorzugt 28 - 50 Gew.-%, besonders bevorzugt 33 - 46 Gew.%, beträgt und der Hydriergrad der konjugierten Dieneinheiten größer als 50 Mol-%, bevorzugt größer als 70 Mol-%, besonders bevorzugt größer als 95 Mol-% ist.

Die Gewichtsmenge an Copolymerisat (D) beträgt bei Anwesenheit von (C) und (B) 0,5 bis 7 Gew.-%, vorzugsweise 1 bis 5 Gew.-%, bezogen auf die Gewichtssumme aus (A) + (B), bei Abwesenheit von (C), aber Anwesenheit von (B) 2 bis 30 Gew.-%, vorzugsweise 5 bis 25 Gew.-%, bezogen auf die Gewichtssumme aus (A) + (B) und bei Abwesenheit von (B) und (C) 2 bis 30 Gew.-%, vorzugsweise 5 bis 20 Gew.-%, bezogen auf die Gewichtssumme aus (A) + (D).

Unter aromatischen Polycarbonaten (A) im Sinne dieser Erfindung werden die bekannten Homopolycarbonate, Copolycarbonate und Mischungen dieser Polycarbonate verstanden, denen z.B. mindestens eines der folgenden Diphenole zugrundeliegt:

Hydrochinon,

Resorcin,

Dihydroxydiphenyle,

Bis-(hydroxyphenyl)-alkane,

Bis-(hydroxyphenyl)-cycloalkane,

Bis-(hydroxyphenyl)-sulfide,

Bis-(hydroxyphenyl)-ether,

Bis-(hydroxyphenyl)-ketone,

Bis-(hydroxyphenyl)-sulfoxide,

Bis-(hydroxyphenyl)-sulfone,

α,α'-Bis-(hydroxyphenyl)-diisopropylbenzole sowie deren kernalkylierte und kernhalogenierte Derivate.

Diese und weitere geeignete Diphenole sind z.B. in den US-PS 3 028 365, 3 275 601, 3 148 172, 3 062 781, 2 991 273 und 2 999 846, in den DE-OS 1 570 703, 2 063 050, 2 063 052, 2 211 957, der FR-PS 1 561 518 und in der Monographie von H. Schnell, "Chemistry and Physics of Polycarbonates", Interscience Publishers, New York 1964, beschrieben.

Bevorzugte Diphenole sind z.B:

4,4'-Dihydroxydiphenyl, α,α'-Bis-(4-hydroxydiphenyl)-p-diisopropylbenzol, 2,2-Bis-(3-methyl-4-hydroxydiphenyl)-propan und 2,2-Bis-(3-chlor-4-hydroxydiphenyl)-propan.

Besonders bevorzugte Diphenole sind z.B:.

2,2 Bis-(4-hydroxydiphenyl)-propan, 2,2-Bis-(3,5-dichlor-4-hydroxydiphenyl)-propan, 2,2-Bis-(3,5-dibrom-4-hydroxydiphenyl)-propan, 1,1-Bis-(4-hydroxydiphenyl)-cyclohexan und 2,2-Bis-(3,5-dimethyl-4-hydroxydiphenyl)-propan.

Die aromatischen Polycarbonate (A) können durch den Einbau geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Folycarbonate (A) sollen in der Regel mittlere Molekulargewichte $M_w$ von 10.000 bis 200.000, vorzugsweise von 20.000 bis 80.000 haben. (Mit $M_w$ ist das durch Lichtstreuung ermittelte Gewichtsmittel des Molekulargewichts bezeichnet.)

Den hochmolekularen Polycarbonaten mit $M_w$ von 10.000 bis 200.000 können auch kleine Anteile niedermolekularer Polycarbonate, z.B. mit einem mittleren Polykondensationsgrad von 2 bis 20, zugemischt sein.

Zur Einstellung des Molekulargewichts $M_w$ der Polycarbonate (A) werden in bekannter Weise Kettenabbrecher, wie beispielsweise Phenol, Halogenphenole oder Alkylphenole, in den berechneten Mengen eingesetzt.

Die erfindungsgemäß eingesetzten Polycarbonate (A) können in bekannter Weise nach dem Phasengrenzflächenverfahren oder in homogener Lösung (Pyridinverfahren) oder in manchen Fällen nach dem Schmelzumesterungsverfahren hergestellt werden.

Polyester (B) im Sinne der Erfindung sind Reaktionsprodukte aus aromatischen Dicarbonsäuren oder ihren reaktionsfähigen Derivaten (z.B. Dimethylestern) und aliphatischen, cycloaliphatischen oder araliphatischen Diolen und Mischungen dieser Reaktionsprodukte.

Bevorzugte Polyester (B) sind Polyalkylenterephthalate; sie lassen sich aus Terephthalsäure (oder ihren reaktionsfähigen Derivaten, z.B. Dimethylterephthalat) und aliphatischen oder cycloaliphatischen Diolen mit 2-10 C-Atomen nach bekannten Methoden herstellen (Kunststoff-Handbuch, Bd. VIII, S. 695 ff, Carl Hanser Verlag, München 1973).

2

Bevorzugte Polyalkylenterephthalate (B) enthalten mindestens 80 Mol-%, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butan-diol-1,4-Reste.

Die bevorzugten Polyalkylenterephtalate (B) können neben Terephthalsäureresten bis zu 20 Mol-% Reste anderer aromatischer oder cycloaliphatischer Dicarbonsäuren mit 8 - 14 C-Atomen oder aliphatischer Dicarbonsäuren mit 4 - 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate (B) können neben Ethandiol- bzw. Butandiol-1,4-resten bis zu 20 Mol-% anderer aliphatischer Diole mit 3 - 12 C-Atomen oder cycloaliphatischer Diole mit 6 - 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Methylpentandiol-2,4, 2-Methylpentan-diol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hy-droxycyclohexan)-propan, 2,4-Dihydroxy-1,1,3,3-tetra-methylcyclobutan, 2,2-Bis-(3-β-hydroxy-ethoxyphenyl)-propan und 2,2-Bis-(4-hydroxypropoxyphenyl)-propan (DE-OS 24 07 674, 24 07 776, 27 15 932).

Die Polyalkylenterephthalate (B) können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate (B), die allein aus Terephthalsäure oder deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate (B) sind auch Copolyester, die aus mindestens zwei der obengenannten Säurekomponenten und/oder aus mindestens zwei der obengenannten Alkoholkomponenten hergestellt sind; besonders bevorzugte Copolyester sind Poly-(ethylenglykol/butandiol-1,4)-terephthalate.

Die als Komponente (B) vorzugsweise verwendeten Polyalkylenterephthalate besitzen im allgemeinen eine Intrinsic-Viskosität von 0,4 bis 1,5 dl/g, vorzugsweise 0,5 - 1,3 dl/g, insbesondere 0,6 - 1,2 dl/g, jeweils gemessen in Phenol/o-Dichlorbenzol (1: 1 Gew.-Tl) bei 25°C. Pfropfpolymerisate im Sinne der Erfindung sind solche, in denen auf einen Kautschuk entweder ein Monomer aus der Reihe Styrol, Methylmethacrylat oder eine Monomermischung von 95 - 50 Gew.-% Styrol, α-Methylstyrol, kernsubstituiertes Styrol, Methylmethacrylat oder Mischungen daraus und 5 - 50 Gew.-% (Meth)Acrylnitril, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure (z.B. Methylacrylat, Ethylacrylat, Methylmethacrylat und Ethylmethacrylat).

Weitere geeignete Kautschuke sind z.B. Polyisopren oder Polychloropren. Geeignet sind weiterhin Alkylacrylatkautschuke auf der Basis von $C_1$-$C_{18}$-Alkylacrylaten, insbesondere Ethyl-, Butyl-, Ethylhexylacrylat. Diese Alkylacrylatkautschuke können gegebenenfalls bis zu 30 Gew.-% Monomere wie Vinylacetat, Acrylnitril, Styrol, Methylmethacrylat, Vinylether copolymerisiert enthalten. Diese Alkylacrylatkautschuke können weiterhin kleinere Mengen (bis zu 50 Gew.-%) vernetzend wirkender ethylenisch ungesättigter Monomere enthalten. Solche sind z.B. Alkylendioldi(meth)acrylate, Polyesterdi-(meth)-acrylate, Di-, Tri-vinylbenzol, Triallylcyanurat, Allyl(meth)-acrylat, Butadien, Isopren etc. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugt sind Dienmonomer- oder Alkylacrylatkautschuke.

Die Pfropfmischpolymerisate enthalten 10 - 95 Gew.-%, insbesondere 20 - 70 Gew.-%, Kautschuk und 90 - 5 Gew.-%, insbesondere 80 - 30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 - 5 μm, insbesondere von 0,1 - 1 μm, vor. Derartige Pfropfmischpolymerisate werden durch radikalische Pfropfcopolymerisation von Monomeren aus der Reihe Styrol, α-Methylstyrol, kernsubstituiertes Styrol, (Meth)Acrylnitril, Methylmethacrylat, Maleinsäureanhydrid, N-substituiertes Maleinimid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse-oder Suspensionspolymerisation.

Die erfindungsgemäß einzusetzenden hydrierten Copolymerisate (D) aus ungesättigten Nitrilmonomeren und konjugierten Dienmonomeren, worin der Hydriergrad der konjugierten Dieneinheiten größer als 50 Mol-%, bevorzugt größer als 70 Mol-%, besonders bevorzugt größer als 95 Mol-% ist, haben einen Gehalt an ungesättigten Nitrilmonomeren von 10 - 55 Gew.-%, bevorzugt von 28 - 50 Gew.-%, besonders bevorzugt von 33 - 46 Gew.-%. Die hydrierten Copolymerisate sind gelfrei und in Methylethylketon und/oder Tetrahydrofuran und/oder chlorierten Kohlenwasserstoffen ohne Rückstände löslich.

Diese hydrierten Copolymerisate werden erhalten, indem man Copolymerisate aus ungesättigten Nitrilmonomeren und konjugierten Dienmonomeren, hergestellt nach einem beliebigen Polymerisationsverfahren, z.B. Emulsions-, Lösungs-, Massepolymerisation, nach üblichen Methoden, wie z.B. beschrieben in US-PS 3 700 637 hydriert, wobei die von den ungesättigten Nitrilmonomeren herruhrenden Nitrilgruppen erhalten bleiben. Beispiele für die zu hydrierenden Copolymerisate sind Copolymerisate aus mindestens einem ungesättigten Nitril, wie Acrylnitril oder Methacrylnitril und mindestens einem konjugierten Dien, wie Butadien-1,3; 2-Methylbutadien-1,3; 2,3-Dimethylbutadien-1,3; Pentadien-1,3.

Spezielle Beispiele für die zu hydrierenden Copolymerisate umfassen ein Acrylnitril-Isopren-Elastomeres, ein Acrylnitril-Isopren-Butadien-Elastomeres. Ein Acrylnitril-Butadien-Elastomeres ist besonders bevorzugt.

Die Komponenten (A) bis (D) sind als solche bekannt. Polycarbonate weisen bekanntlich hohe Izod-Kerbschlagzähigkeitswerte (ASTM D-256) von etwa 8,54 J/cm (16 ft -lbs/in.) auf, die in Verbindung mit dem Brechen durch Verformungsbruch charakteristisch für Prüfkörper schmäler als etwa 3,2 mm (1/8'') sind. Breitere Prüfkörper, d.h. mit einer Breite von 6,35 mm (1/4''), reißen durch Sprödbruch bei etwa 1,33 J/cm (2,5 ft-lbs/in.).

Die Abhängigkeit der Kerbschlagzähigkeit von der Breite führt zu dem Begriff der "kritischen Breite", einem Werkstoffparameter, der als die Breite definiert wird, bei der in der graphischen Darstellung der Kerbschlagzähigkeit in Abhängigkeit von der Probenbreite eine Unterbrechung auftritt. Die Kerbschlagzähigkeit wird nach ASTM D-256 gemessen.

Unter der Breite der Probe soll die Kantenlänge des Prüfstabes verstanden werden, die parallel zur Kerbe verläuft. Damit ist die Breite der Probe gleichzeitig die Länge der Kerbe.

Beispielsweise zeigt Polycarbonat auf Basis von Bisphenol A mit einer Schmelzflußrate von 3 - 6 g/10 min bei 300°C (ABTM D-1238) eine Unterbrechung bei etwa 5,7 mm. Formteile aus diesem Material, die schmäler sind als 5,7 mm, brechen beim Aufschlag durch Verformungsbruch, während dickere Formteile durch Sprödbruch brechen.

Die Abhängigkeit der Kerbschlagzähigkeit von der Breite stellt einen Nachteil dar, weil sie der Dimensionierung und Formgestaltung von Formteilen Begrenzungen auferlegt.

Die bisher bekannten Lösungen zur Verbesserung der kritischen Breite von Polycarbonat, beispielsweise der Zusatz von Polyolefinen (US-Patent 3 437 631), der Zusatz von ABS (US-Patent 3 663 471) oder der Zusatz von Pfropfcopolymerisaten (US-Patent 4 299 928) sind nicht völlig befriedigend. Wegen der ausgeprägten Unverträglichkeit zwischen Polycarbonat und Polyolefinen kommt es oft zur Delaminierung, d.h., Teile der Oberfläche können mit geringem Kraftaufwand schichtenweise abgezogen werden. Die Zugabe von ABS-Polymerisaten reduziert im allgemeinen die Wärmeformbeständigkeit der Mischungen zu stark und verschlechtert ihre Fließfähigkeit.

Die Zugabe der erfindungsgemäß zu verwendenden hydrierten Copolymerisate (D) in Mengen zwischen 2 - 30 Gew.-%, bezogen auf (A) + (D) erhöht die kritische Breite von Polycarbonat, ohne diese Nachteile zu zeigen. Bevorzugt werden 5 - 20 Gew.-% des hydrierten Copolymeren eingesetzt.

Die Mischungen aus Polycarbonat und hydrierten Copolymerisaten aus ungesättigten Nitrilmonomeren und konjugierten Dienmonomeren können auch zusätzlich thermoplastische Polyester enthalten. Die Anwesenheit der Polyesterkomponente verleiht den Massen Benzinbeständigkeit, so daß daraus hergestellte Formkörper unter Spannung in Benzin getaucht werden können, ohne daß Brüche oder tiefe Risse auftreten. Schon kleine Polyestermengen zeigen eine positive Wirkung. Da die Polyesterkomponente aber zusätzlich die Fließfähigkeit der Massen verbessert, werden Mengenverhältnisse zwischen Polycarbonat und Polyester von 98: 2 bis 30: 70 angewandt.

Mischungen aus Polycarbonaten und Polyestern ohne den erfindungsgemäßen Zusatz eines hydrierten Copolymeren sind aus DE-PS 1 187 793 und DE-AS 1 694 124 bekannt. Diese Formmassen zeigen jedoch keine Zähigkeit. Für praktische Anwendungen, etwa zur Herstellung von Kfz-Stoßfängern oder Rammleisten müssen die Formmassen schlagzäh ausgerüstet werden.

Die Mischungen von Polyestern (B), Polycarbonaten (A) und den hydrierten Copolymeren (D) aus ungesättigten Nitrilmonomeren und konjugierten Dienmonomeren zeigen hohe Zähigkeiten in Kombination mit einer guten Benzinbeständigkeit. Die erfindungsgemäßen Formmassen zeigen nach dem Tauchen in Benzinsimulanz (Isooctan: Toluol = 1: 1 bzw. Isooctan: Toluol = 1: 1 + 15 % Methanol) unter Spannung weder Rißbildung noch eine Veränderung des Farbeindruckes der Oberfläche. Diese positiven Eigenschaften werden bei der Zugabe von 2 - 30 Gew.-%, bezogen auf die Gewichtssumme aus (A) + (B), des hydrierten Copolymeren erreicht. Vorzugsweise werden 5 - 25 Gew.-% eingesetzt.

Mischungen aus Polycarbonaten, Polyestern und kautschukelastischen Pfropfcopolymerisaten (C) sind aus US-PS 3 864 428 bzw. DE-AS 2 343 609 oder US-PS 4 264 487 bzw. EP-A 25 920 bekannt. Diese Mischungen ähneln in ihrem Zähigkeitsverhalten zwar weitgehend den Mischungen aus Polycarbonat, Polyester und hydriertem Copolymerisat (D) -also ohne Komponente (C) - haben aber Mängel in ihrer Benzinbeständigkeit. So wird beim Tauchen in Isooctan/ Toluol unter Spannung eine ausgeprägte Rißbildung beobachtet, während in methanolhaltigem Benzinsimulanz eine starke Vergrauung der Oberfläche eintritt.

Die GB-A-2004284 lehrt, daß der Zusatz von selectiv hydrierten Styrol-Dutadien-Styrolblockcopolymeren zu Polycarbonat diesem eine gute Schmelzflußcharakteristik, geringe Versprödungsneigung, gutes Spannungseinverhalten und Benzinfestigkeit verleiht.

Es hat sich nun gezeigt, daß schon ein kleiner Zusatz eines hydrierten Copolymerisats (D) von 0,5 - 7 Gew.-%, vorzugsweise 1 - 5 Gew.-%, bezogen auf die Gewichtssumme aus Polycarbonat (A), Polyester (B), zu den

4

Mischungen aus Polycarbonat (A), Polyester (B) und kautschukelastischem Pfropfcopolymerisat (C) eine optimale Eigenschaftskombination zwischen Zähigkeit und Benzinbeständigkeit bewirkt, wie sie ohne den erfindungsgemäßen Zusatz eines hydrierten Copolymerisats (D) nicht auftritt. Der erfindungsgemäße Zusatz (D) erhöht insbesondere die Benzinbeständigkeit, die Tieftemperaturzähigkeit, die kritische Breite bei Raumtemperatur, und das Verhalten beim Durchstoßversuch bei -40°C.

Die erfindungsgemäßen Formmassen aus Polycarbonaten und den hydrierten Copolymerisaten können in üblicher Weise durch thermoplastische Verformung zu Formkörpern bei Temperaturen von 260 - 310°C auf üblichen Polycarbonatverarbeitungsmaschinen verarbeitet werden. Sie können überall dort eingesetzt werden, wo bislang bekannte Polycarbonate ohne oder mit Schlagzähmodifikator eingesetzt werden. Sie können noch Zusätze wie Verarbeitungshilfsmittel, Füll- oder Verstärkungsmaterialien, Stabilisatoren oder Flammschutzmittel enthalten.

Die erfindungsgemäßen Formmassen aus Polycarbonaten, Polyalkylenterephthalaten, gegebenenfalls Pfropfpolymerisaten und hydrierten Copolymerisaten können bis zu 60 Gew.-%, bezogen auf Gesamtgewicht der verstärkten Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Flammgeschützte Varianten der erfindungsgemäßen Formmassen enthalten Flammschutzmittel in einer Konzentration von im allgemeinen weniger als 30 Gew.-%, bezogen auf Gesamtgewicht der flammgeschützten Formmassen.

Es kommen die für polycarbonate bzw. Polyester bekannten Flammschutzmittel in Frage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, wie z.B. Antimontrioxid.

Die erfindungsgemäßen Formmassen können bei Massetemperaturen von 260 bis 280°C und bei Formtemperaturen von 60 bis 70°C verspritzt werden.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Ihre technische Verwendung erfolgt beispielsweise im Außenbereich von Kraftfahrzeugen beispielsweise als Stoßfänger oder Prallschürzen.

Die erfindungsgemäßen Formmassen aus Polycarbonaten, Polyalkylenterephthalaten, Pfropfpolymerisaten und hydrierten Copolymerisaten eignen sich beispielsweise gut zur Herstellung von Scheinwerferreflektoren, Ventilatorpropellern oder Zahnrädern oder ähnlichen Formkörpern.

**Beispiele**

Die Ergebnisse der folgenden Beispiele sind in der Tabelle 1 zusammengefaßt:

**Verwendete Komponenten**

(A) Polycarbonat auf der Basis von Bisphenol A mit einer relativen Lösungsviskosität von 1,29, gemessen in Methylenchlorid in einer Konzentration von 0,5 g/100 ml $CH_2Cl_2$ bei 25°C;

(B) Polybutylenterephthlat mit einer Intrinsic-Viskosität von 1,16 dl/g;

(C) kautschukelastisches Pfropfcopolymerisat aus 79,2 Tln n-Butylacrylat, das mit 0,4 Tl 1,3-Butylendiacrylat vernetzt ist, und in dem 0,4 Tl Diallylmaleat als Pfropfmonomeres einpolymerisiert sind, als Pfropfgrundlage und 20 Tle Polymethylmethacrylat als Pfropfauflage;

(D) hydriertes Butadien-Acrylnitril-Copolymerisat mit einem Acrylnitrilgehalt von 34 Gew.-%, einem Hydriergrad von > 99 Mol-% und einer Mooney-Viskosität ML 1 + 4 / 100°C von 70 ± 8 ME.

Copolyethylen, bestehend aus 7 % n-Butylacrylat, 4 % Acrylsäure und 84 % Ethylen.

Pigment (grau), Mischung aus Titandioxid und Ruß.

**Compoundierung**

Die Komponenten wurden in einer geeigneten Maschine bei 270°C Massetemperatur gemischt und granuliert. Die Zusammensetzung der Compounds ist in Tabelle 1 angegeben.

## Verarbeitung

Das bei der Compoundierung erhaltene Granulat wurde in einer Spritzgießmaschine bei 270 C Massetemperatur und 60°C Formtemperatur zu für die einzelnen Prüfungen erforderlichen Formkörpern verarbeitet.

## Prüfung

Kritische Breite: An verschieden breiten Prüfstäben wird entsprechend ASTM D-256 die Kerbschlagprüfung durchgeführt und die Breite bestimmt, oberhalb der die Kerbschlagzähigkeit drastisch kleiner wird.

Kerbschlagzähigkeit: gemessen nach ISO/R 179.

Benzinbeständigkeit: Von jeder Probe werden zwei Normkleinstäbe in Anlehnung an den DIN-Entwurf 53 449, Teil 3, so über zwei Metallschablonen gespannt, daß sie eine Randfaserdehnung von 0,6 % haben. Jeder Normkleinstab wird nun 5 min in ein Kraftstoffsimulanz getaucht:

Kraftstoff a) besteht aus 50 % Isooctan und 50 % Toluol,

Kraftstoff b) enthält zusätzlich 15 % Methanol.

An den getauchten Proben wird die Rißbildung beurteilt.

Zur Prüfung auf die Neigung zum Vergrauen wird pro Medium ein Normkleinstab der Probe ohne Spannungsbelastung 1 min eingetaucht und die Vergrauung beurteilt.

Wärmeformbeständigkeit: Vicat-Erweichungstemperatur V S T Methode B, gemessen nach ISO 306 (DIN 53 460).

Durchstoßversuch: Gemessen an Rundplatten gemäß DIN 53 443.

## Tabelle 1

| Beispiel Nr. | | | 1 | 2 | 3 | 4 | 5 | 6 (Vergl.) | 7 (Vergl.) |
|---|---|---|---|---|---|---|---|---|---|
| Komponente A | | Gew.-% | 95 | 92,5 | 90 | 52 | 52 | 52 | 60 |
| " | B | " | – | – | – | 40 | 40 | 40 | 40 |
| " | C | " | – | – | – | – | 5 | 5 | – |
| " | D | " | 5 | 7,5 | 10 | 7 | 2 | – | – |
| Pigment | | " | – | – | – | 1 | 1 | 1 | – |
| Copolyethylen | | " | – | – | – | – | – | 2 | – |
| Kraftstoff a Rißb. *1) | | | – | – | – | – | K | W | S | S |
| " a Vergrau. | | | – | – | – | – | K | K | K | – |
| Kraftstoff b Rißb. | | | – | – | – | – | K | K | K | S |
| " b Vergrau. | | | – | – | – | – | K | K | S | – |
| Vicat-Temperatur | | °C | 143 | – | – | 118 | 120 | 123 | 105 |
| Kerbschlagzähigkeit (RT) | | kJ/m² | 51 | 50 | 50 | 58 | 61 | 57 | 5 |
| " (-40 °C) | | " | 13 | 14 | 13 | 8 | 10 | 7 | – |
| kritische Breite (RT) | | " | > 8 *3) | > 8 | > 8 | 4 | 7,4 | 4,7 | – |
| (-40 °C) | | " | | 6,6 | > 8 | > 8 | – | – | – | – |
| Durchstoßversuch (10 Proben) *2) | | | – | – | – | – | – | 10xZ | 5 x Z/ 5 x S | – |

*1)K:keine) Risse W:wenig) Vergrauung S:viele)
*2) Z: Zähbruch
S: Sprödbruch
*3) Das vewendete Polycarbonat hatte unmodifiziert eine kritische Breite von 4,8 mm bei RT

**Patentansprüche**

1. Thermoplastische Formmassen aus
(A) thermoplastischen, aromatischen Polycarbonaten mit Molekulargewichten $M_w$ zwischen 10 000 und 200 000 ($M_w$ = Gewichtsmittel, ermittelt mittels Lichtstreuung), gegebenenfalls
(B) thermoplastischen Polyestern, bevorzugt im Mengenverhältnis Polycarbonat zu Polyester von 98: 2 bis 30: 70, und gegebenenfalls
(C) kautschukelastischen Pfropfpolymerisaten in Mengen von 1 - 30 Gew.-%, bezogen auf die Gewichtssumme aus (A) und (B), gekennzeichnet durch einen Gehalt an
(D) hydrierten Copolymerisaten aus ungesättigten Nitrileinheiten und konjugierten Dienmonomeren, worin der Anteil an ungesättigten Nitrilmonomeren 10 - 55 Gew.-% beträgt und der Hydriergrad der konjugierten Dieneinheiten >50 Mol-% ist, wobei in Mischungen aus
(a) (A) + (D) und
(b) (A) + (B) + (D)
die Gewichtsmenge von (D) 2 - 30 Gew.-%, bezogen auf die Gewichtssumme aus (A) + (D) bzw. aus (A) + (B) beträgt, und in Mischungen aus
(c) (A) + (B) + (C) + (D)
die Gewichtsmenge von (D) 0,5 - 7 Gew. -%, bezogen auf die Gewichtssumme aus (A) + (B), beträgt.
2. Thermoplastische Formmassen gemäß Anspruch 1, dadurch gekennzeichnet, daß der Hydriergrad der konjugierten Dieneinheiten der Komponente (D) größer als 70 Mol-% ist.
3. Thermoplastische Formmassen gemäß Anspruch 1, dadurch gekennzeichnet, daß der Hydriergrad der konjugierten Dieneinheiten der Komponente (D) größer als 95 Mol-% ist.
4. Thermoplastische Formmassen gemäß Anspruch 1, dadurch gekennzeichnet, daß die Gewichtsmenge der Komponente (D) in Mischungen aus
(a) (A) + (D) 5 - 20 Gew.-%,
(b) (A) + (B) + (D) 5 - 25 Gew.-%, und
(c) (A) + (B) + (C) + (D) 1 - 5 Gew.-%,
jeweils bezogen auf die Gewichtssumme aus (A) + (D) bzw. aus (A) + (B) beträgt.

**Claims**

1. Thermoplastic moulding compositions of
(A) thermoplastic, aromatic polycarbonates having molecular weights $M_w$ of between 10,000 and 200,000 ($M_w$ = weight average, determined using light scattering), optionally,
(B) thermoplastic polyesters, preferably in a quantitative ratio of polycarbonate to polyester of 98: 2 to 30: 70, and, optionally,
(C) rubber-elastic graft polymers in quantities of 1 - 30 % by weight, based on the total weight of (A) and (B), characterized by a content of
(D) hydrogenated copolymers of unsaturated nitrile units and conjugated diene monomers, in which the content of unsaturated nitrile monomers is 10 - 55 % by weight and the degree of hydrogenation of the conjugated diene units is > 50 mol-%, wherein in mixtures of
(a) (A) + (D) and
(b) (A) + (B) + (D)
the quantity by weight of (D) is 2 - 30 % by weight, based on the total weight of (A) + (D) respectively (A) + (B), and in mixtures of
(c) (A) + (B) + (C) + (D)
the quantity by weight of (D) is 0.5 - 7 % by weight, based on the total weight of (A) + (B).
2. Thermoplastic moulding compositions according to Claim 1, characterized in that the degree of hydrogenation of the conjugated diene units of component (D) is greater than 70 mol-%.
3. Thermoplastic moulding compositions according to Claim 1, characterized in that the degree of hydrogenation of the conjugated diene units of component (D) is greater than 95 mol-%.
4. Thermoplastic moulding compositions according to Claim 1, characterized in that the quantity by weight of component (D) is

5 - 20 % by weight in mixtures of (a) (A) + (D),
5 - 20 % by weight in mixtures of (b) (A) + (B) + (D), and
1 - 5 % by weight in mixtures of (c) (A)+(B)+(C)+(D),
based in each case on the total weight of (A) + (D) respectively (A) + (B).

**Revendications**

1. Matières à mouler thermoplastiques consistant en:

(A) des polycarbonates aromatiques thermoplastiques de poids moléculaire $M_w$ 10 000 à 200 000 ($M_w$ = moyenne en poids, déterminée par diffraction de la lumière), le cas échéant

(B) des polyesters thermoplastiques, de préférence en quantités correspondant à des proportions relatives de 98:2 à 30:70 entre le polycarbonate et le polyester, et le cas échéant

(C) des polymères greffés élastiques à la manière des caoutchoucs, en quantités de 1 à 30% en poids, par rapport à la somme des poids de (A) et (B), ces matières à mouler se caractérisant en ce qu'elles contiennent

(D) des copolymères hydrogénés de motifs de nitriles insaturés et de monomères diéniques conjugués, la proportion des nitriles monomères insaturés étant de 10 à 55% en poids et le taux d'hydrogénation des motifs de diènes conjugués étant supérieur à 50 moles%, et en ce que, dans les mélanges de:

(a) (A) + (D) et
(b) (A) + (B) + (D),

la proportion en poids de (D) est de 2 à 30% en poids, par rapport à la somme des poids de (A) + (D) ou de (A) + (B) respectivement, et dans les mélanges de:

(c) (A) + (B) + (C) + (D),

la proportion en poids de (D) est de 0,5 à 7% en poids, par rapport à la somme des poids de (A) + (B).

2. Matières à mouler thermoplastiques selon la revendication 1, caractérisées en ce que le taux d'hydrogénation des motifs de diènes conjugués du composant (D) est supérieur à 70 moles%.

3. Matières à mouler thermoplastiques selon la revendicatiom 1, caractérisées en ce que le taux d'hydrogénation des motifs de diènes conjugués du composant (D) est supérieur à 95 moles%.

4. Matières à mouler thermoplastiques selon la revendication 1, caractérisées en ce que la proportion en poids du composant (D) est de:

(a) 5 à 20% en poids dans les mélanges (A) + (D),
(b) 5 à 25% en poids dans les mélanges (A) + (B) + (D), et
(c) 1 à 5% en poids dans les mélanges (A) + (B) + (C) + (D),
dans tous les cas par rapport à la somme des poids de (A) + (D) ou de (A) + (B) respectivement.